# EUROPÄISCHE PATENTANMELDUNG

(11) **EP 1 050 212 A1**
(43) Veröffentlichungstag der Anmeldung: **08.11.2000**
(21) Anmeldenummer: 00109432.5
(22) Anmeldetag: 03.05.2000
(51) Int. Cl.: A21C 15/00, A21C 11/00

(54) **Verfahren zum Herstellen eines zylindrischen Brotlaibs und eines Snackprodukts**

(30) Priorität: 03.05.1999 DE 19920077
(71) Anmelder: Oldenburger Fleischwaren GmbH, 26135 Oldenburg (DE)
(72) Erfinder: Oltmer, Jürgen, 26188 Edewecht (DE)
(74) Vertreter: Winkler, Andreas, Dr.

(57) **Zusammenfassung**

Snackprodukt mit einem Brot- und einem Wursterzeugnis, dadurch gekennzeichnet, daß in einer zusammenhängenden Verpackung ein zylindrisches Wursterzeugnis und ein zylindrisches Broterzeugnis, deren Abmessungen näherungsweise gleich sind, getrennt voneinander haltbar verpackt sind.

## Beschreibung

Die Erfindung betrifft ein Verfahren zum Herstellen von Brot, bei dem ein Teig zubereitet wird, in eine Form gefüllt wird und in einer Dampfatmosphäre gegart wird, sowie ein Snackprodukt mit einem Brot- und einem Wursterzeugnis.

Snackprodukte mit einem Brot- und einem Wursterzeugnis sind bereits in unterschiedlichen Formen bekannt, beispielsweise als abgepacktes Sandwich, wobei die bekannten Produkte meist nur wenige Tage haltbar sind. Ferner sind Wurst-Snackerzeugnisse bekannt, wobei aber lediglich eine Wurst, beispielsweise eine Salami mit kleinen Abmessungen, dauerhaft haltbar verpackt ist, so daß sich ein Konsument um die Bereitstellung einer zu einem derartigen Snack passenden Brotmenge selbst kümmern muß.

Die Erfindung hat sich zur Aufgabe gestellt, ein Snackprodukt mit einem Brot- und einem Wursterzeugnis dahingehend zu verbessern, daß eine im Vergleich zu frischen Erzeugnissen wesentlich verlängerte Haltbarkeit gewährleistet ist, daß die Erzeugnisse leichter gehandhabt und verzehrt werden können, und daß Herstellungs- und Verpackungskosten deutlich gesenkt werden.

Diese Aufgabe wird erfindungsgemäß durch ein Snackprodukt mit einem Brot- und einem Wursterzeugnis gelöst, welches sich dadurch auszeichnet, daß in einer zusammenhängenden Verpackung ein zylindrisches Wursterzeugnis und ein zylindrisches Broterzeugnis, deren Abmessungen näherungsweise gleich sind, getrennt voneinander haltbar, d.h. insbesondere steril und/oder unter Vakuum, verpackt sind.

Die Verpackung ist bevorzugt so gewählt, daß eine dauerhafte Haltbarkeit von bis zu 120 Tagen gewährleistet ist, insbesondere durch Vakuumverpackung in (Kunststoff-)Folie.

Vorzugsweise ist der Durchmesser des Broterzeugnisses größer als der Durchmesser des Wursterzeugnisses.

Bevorzugt liegt der Durchmesser der beiden Erzeugnisse zwischen 15 und 40 mm.

Bevorzugt ist vorgesehen, daß die Verpackung aus einer gemeinsamen, zusammenhängenden Kunststoffolienverpackung besteht. Dies kann eine Verpackung sein, bei der das Brot- und das Wursterzeugnis in einer Kunststoffschale aufgenommen sind, die mit einer Deckfolie verschlossen ist, oder eine durch zwei die Erzeugnisse dazwischen aufnehmende, miteinander verschweißte Kunststoffolien gebildete Folienverpackung.

Die Erfindung betrifft ferner ein Verfahren zum Herstellen eines zylindrischen Brotlaibs, welches sich besonders zur Herstellung des in dem Snackprodukt enthaltenen Broterzeugnisses eignet, wobei ein Teig zubereitet wird, in eine Form gefüllt wird und in einer Dampfatmosphäre gegart wird, welches sich dadurch auszeichnet, daß der Teig in einen Darmhüllenabschnitt zylindrischer Grundform gefüllt wird, der nach Abschluß des Garvorgangs durch Schälen entfernt wird, so daß ein zylindrischer Brotlaib hergestellt wird. Zum Garen können übliche Rauch- bzw. Kochkammern verwendet werden, wie sie in der Nahrungsmittelindustrie, insbesondere Wurstherstellung, bekannt sind, beispielsweise Geräte des Herstellers Germos, Remshalden.

Bevorzugt ist vorgesehen, daß ein Cellulosedarm verwendet wird.

Bevorzugt erfolgt das Einfüllen des Teigs unter Verwendung einer bei der Wurstherstellung üblichen Füllvorrichtung. Hier können Geräte verwendet werden, wie sie beispielsweise von dem Hersteller Handtmann, Biberach/Riss vertrieben werden.

Bevorzugt weist die Dampfatmosphäre 90 bis 100% Feuchte auf. Die Temperatur in der Dampfatmosphäre kann 90 bis 100°C betragen. Der Durchmesser der Darmhülle kann 15 bis 40 mm betragen. Der Teig kann während 20 bis 50 Minuten gegart werden.

Es kann vorgesehen sein, daß das Brot nach dem Garen gekühlt wird. Das Brot kann nach dem Garen zunächst kalt geduscht werden, um die Schälbarkeit zu verbessern.

Bevorzugt ist vorgesehen, daß der Garvorgang unter Verwendung einer bei der Wurstherstellung üblichen Heißräuchervorrichtung (Kochkammer) erfolgt. Zweckmäßigerweise erfolgt das Schälen mit einer bei der Wurstherstellung üblichen Schälmaschine. Auch hier können beispielsweise Geräte des Herstellers Handtmann verwendet werden.

Es kann helles oder dunkles Vollkornbrot hergestellt werden. Dem Teig können Zusätze wie Käse oder Schinken zugemischt werden.

Bevorzugt wird das fertige Brot in Kunststoffolie vakuumverpackt. Zweckmäßigerweise erfolgt das Verpacken unmittelbar nach der Herstellung bzw. dem Garvorgang, um möglichst sterile Bedingungen zu haben. Zusätzlich kann eine Sterilisierung oder keim- bzw. bakterienabtötende Behandlung (Bestrahlung o.ä.) erfolgen, um die Haltbarkeit gegenüber einem Frischerzeugnis weiter zu verbessern.

Die Erfindung betrifft ferner ein Verfahren zum Herstellen eines Snackprodukts mit einem Brot- und einem Wursterzeugnis, wobei sich das Verfahren dadurch auszeichnet, daß in einer zusammenhängenden Verpackung ein zylindrisches Wursterzeugnis und ein zylindrisches Broterzeugnis, deren Abmessungen näherungsweise gleich sind, getrennt voneinander steril und/oder unter Vakuum verpackt werden. Bevorzugt beträgt die Haltbarkeit bis zu 120 Tage. Das Brotzerzeugnis kann einen größeren Durchmesser als das Wursterzeugnis haben.

Bevorzugt ist vorgesehen, daß das Broterzeugnis nach dem erfindungsgemäßen Verfahren zum Herstellen von Brot hergestellt ist.

## Patentansprüche

1. Snackprodukt mit einem Brot- und einem Wursterzeugnis, dadurch gekennzeichnet, daß in einer zusammenhängenden Verpackung ein zylindrisches Wursterzeugnis und ein zylindrisches Broterzeugnis, deren Abmessungen näherungsweise gleich sind, getrennt voneinander steril und/oder vakuumverpackt sind.

2. Snackprodukt nach Anspruch 1, dadurch gekennzeichnet, daß der Durchmesser des Broterzeugnisses größer ist als der Durchmesser des Wursterzeugnisses.

3. Snackprodukt nach Anspruch 1 oder 2, dadurch gekennzeichnet, daß der Durchmesser der Erzeugnisse zwischen 15 und 40 mm liegt.

4. Snackprodukt nach einem der Ansprüche 1 bis 3, dadurch gekennzeichnet, daß die Verpackung aus einer gemeinsamen, zusammenhängenden Kunststoffolienverpackung besteht.

5. Snackprodukt nach einem der vorangehenden Ansprüche, gekennzeichnet durch eine dauerhaft haltbare Verpackung, insbesondere Vakuumverpackung, mit einer Haltbarkeit von bis zu 120 Tagen.

6. Verfahren zum Herstellen eines zylindrischen Brotlaibs, insbesondere für ein Snackprodukt nach einem der Ansprüche 1 bis 5, wobei ein Teig zubereitet wird, in eine Form gefüllt und in einer Dampfatmosphäre gegart wird, dadurch gekennzeichnet, daß der Teig in einen Darmhüllenabschnitt zylindrischer Grundform gefüllt wird, der nach Abschluß des Garvorgangs durch Schälen entfernt wird, so daß ein zylindrischer Brotlaib hergestellt wird.

7. Verfahren nach Anspruch 6, dadurch gekennzeichnet, daß ein Cellulosedarm verwendet wird.

8. Verfahren nach Anspruch 6 oder 7, dadurch gekennzeichnet, daß das Einfüllen des Teigs unter Verwendung einer bei der Wurstherstellung üblichen Füllmaschine erfolgt.

9. Verfahren nach einem der Ansprüche 6 bis 8, dadurch gekennzeichnet, daß die Dampfatmosphäre 90 bis 100% Feuchte aufweist.

10. Verfahren nach einem der Ansprüche 6 bis 9, dadurch gekennzeichnet, daß die Temperatur der Dampfatmosphäre 90 bis 100°C beträgt.

11. Verfahren nach einem der Ansprüche 6 bis 10, dadurch gekennzeichnet, daß der Durchmesser der Darmhülle 15 bis 40 mm beträgt.

12. Verfahren nach einem der Ansprüche 6 bis 11, dadurch gekennzeichnet, daß der Teig 20 bis 50 Minuten gegart wird.

13. Verfahren nach einem der Ansprüche 6 bis 12, dadurch gekennzeichnet, daß das Brot nach dem Garen gekühlt wird.

14. Verfahren nach einem der Ansprüche 6 bis 13, dadurch gekennzeichnet, daß das Brot nach dem Garen zunächst kalt geduscht wird, um die Schälbarkeit zu verbessern.

15. Verfahren nach einem der Ansprüche 6 bis 14, dadurch gekennzeichnet, daß der Garvorgang unter Verwendung einer bei der Wurstherstellung üblichen Heißräuchervorrichtung (Kochkammer) erfolgt.

16. Verfahren nach einem der Ansprüche 6 bis 15, dadurch gekennzeichnet, daß das Schälen unter Verwendung einer bei der Wurstherstellung üblichen Schälmaschine erfolgt.

17. Verfahren nach einem der Ansprüche 6 bis 16, dadurch gekennzeichnet, daß helles oder dunkles Vollkornbrot hergestellt wird.

18. Verfahren nach einem der Ansprüche 6 bis 17, dadurch gekennzeichnet, daß dem Teig Zusätze wie Käse oder Schinken zugemischt werden.

19. Verfahren nach einem der Ansprüche 6 bis 18, dadurch gekennzeichnet, daß das fertige Brot vakuumverpackt wird, bevorzugt in Kunststoffolie.

20. Verfahren zum Herstellen eines Snackprodukts mit einem Brot- und einem Wursterzeugnis, dadurch gekennzeichnet, daß das Broterzeugnis nach einem Verfahren nach einem der Ansprüche 6 bis 19 hergestellt wird.

21. Verfahren zum Herstellen eines Snackprodukts nach Anspruch 20, dadurch gekennzeichnet, daß in einer zusammenhängenden Verpackung ein zylindrisches Wursterzeugnis und ein zylindrisches Broterzeugnis, deren Abmessungen näherungsweise gleich sind, getrennt voneinander steril und/oder vakuumverpackt werden.
